(19) Europäisches Patentamt / European Patent Office / Office européen des brevets

(11) **EP 2 980 276 B1**

(12) **EUROPEAN PATENT SPECIFICATION**

(45) Date of publication and mention of the grant of the patent:
**08.05.2019 Bulletin 2019/19**

(21) Application number: **14775143.2**

(22) Date of filing: **25.03.2014**

(51) Int Cl.:
*C25B 3/04* *(2006.01)*          *C25B 1/10* *(2006.01)*
*C25B 9/08* *(2006.01)*          *C25B 15/08* *(2006.01)*

(86) International application number:
**PCT/JP2014/001709**

(87) International publication number:
**WO 2014/156126 (02.10.2014 Gazette 2014/40)**

(54) **ELECTROCHEMICAL REDUCTION DEVICE AND PRODUCTION METHOD FOR HYDROGENATED PRODUCT OF AROMATIC COMPOUND**

ELEKTROCHEMISCHE REDUKTIONSVORRICHTUNG UND VERFAHREN ZUR HERSTELLUNG EINES HYDRIERTEN PRODUKTS EINER AROMATISCHEN VERBINDUNG

DISPOSITIF DE RÉDUCTION ÉLECTROCHIMIQUE ET PROCÉDÉ DE PRODUCTION D'UN PRODUIT HYDROGÉNÉ DE COMPOSÉ AROMATIQUE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **29.03.2013 JP 2013074109**

(43) Date of publication of application:
**03.02.2016 Bulletin 2016/05**

(73) Proprietor: **JX Nippon Oil & Energy Corporation Chiyoda-ku Tokyo 100-8162 (JP)**

(72) Inventors:
• **SATO, Yasushi Tokyo 100-8162 (JP)**

• **MIYOSHI, Kota Tokyo 100-8162 (JP)**
• **NAKAGAWA, Kojiro Tokyo 100-8162 (JP)**
• **KOBORI, Yoshihiro Tokyo 100-8162 (JP)**

(74) Representative: **Algemeen Octrooi- en Merkenbureau B.V. P.O. Box 645 5600 AP Eindhoven (NL)**

(56) References cited:
**WO-A1-2011/122155     WO-A1-2012/043086
WO-A1-2013/145782     CN-U- 202 465 890
JP-A- 2002 317 285     JP-A- 2009 007 647
US-A1- 2007 000 788**

EP 2 980 276 B1

**Description**

The present invention relates to a technique for electrochemically hydrogenating an aromatic hydrocarbon compound or a nitrogen-containing heterocyclic aromatic compound, in particular an electrochemical reduction device according to the claim 1 and a method for manufacturing a hydride of an aromatic compound according to claim 2.

It is known that a cyclic organic compound such as cyclohexane or decalin is efficiently obtained by hydrogenating a benzene ring of a corresponding aromatic hydrocarbon compound (benzene or naphthalene) using a hydrogen gas. This reaction requires reaction conditions of high temperature and high pressure, and thus is unsuitable for small to medium scale manufacturing a cyclic organic compound. On the other hand, in an electrochemical reaction using an electrolysis cell, it is not necessary to treat gaseous hydrogen since water can be used as a source of hydrogen, and also the reaction is known to proceed under relatively mild reaction conditions (at from room temperature to about 200°C and under normal pressure).

[Patent document No. 1] JP 2003-045449
[Patent document No. 2] JP 2005-126288
[Patent document No. 3] JP 2005-239479
[Patent document No. 4] WO2012/043086 describes a device for electrochemically manufacturing an organic hydride having an electrode structure that forms a matrix in which a metal catalyst supporting carbon or a metal catalyst is suitably intermingled with a proton conductive solid polymer electrolyte.
[Patent document No. 5] US2007/000788 describes an organic compound hydrogenation apparatus including a reaction cell to which an electrolytic solution is supplied, and an anode and a cathode arranged in the reaction cell, in which the cathode is made of a material including a hydrogen storage material.
[Patent document No.6] CN202465890 describes an electrolyte liquid feeding control device comprising a electrolytic bath body and a liquid storage barrel, wherein a liquid feeding pump is arranged between the electrolytic bath body and the liquid storage barrel as well as an ion concentration detection device that is arranged in the electrolytic bath body and is connected with a frequency conversion speed control device and wherein the frequency conversion speed control device is connected with the liquid feeding pump.
[non-patent document No. 1] Masaru Ichikawa, J. Jpn. Inst. Energy, vol. 85, 517 (2006)

As an example of electrochemically hydrogenating a benzene ring of an aromatic hydrocarbon compound such as toluene, a method has been reported in which toluene that is vaporized into a gaseous state is sent to the reduction electrode side to obtain methylcyclohexane, in which a benzene ring is hydrogenated, without going a state of a hydrogen gas, in a configuration similar to that of water electrolysis (see Masaru Ichikawa, J. Jpn. Inst. Energy, vol. 85, 517 (2006)). However, the amount of substance that can be transformed per electrode area or time (current density) is not large, and it has been difficult to industrially hydrogenate a benzene ring of an aromatic hydrocarbon compound.

The present invention has been devised in view of the problem described above, and an object thereof is to provide a technique capable of electrochemically hydrogenating a benzene ring of an aromatic hydrocarbon compound or a nitrogen-containing heterocyclic aromatic compound with high efficiency.

An aspect of the present invention is an electrochemical reduction device according to claim 1.

Another aspect of the present invention is a method for manufacturing a hydride of an aromatic compound according to claim 2.

Embodiments will now be described, by way of example only, with reference to the accompanying drawings which are meant to be exemplary, not limiting, and wherein like elements are numbered alike in several Figures, in which:

Fig. 1 is a schematic diagram illustrating the general configuration of an electrochemical reduction device according to an embodiment 1;
Fig. 2 is a diagram illustrating the general configuration of an electrode unit of the electrochemical reduction device according to the embodiment 1;
Fig. 3 is a graph illustrating dependence of the current density to the amount of toluene circulation when the concentration of toluene is changed;
Fig. 4 is a flowchart illustrating an example of potential control of a reduction electrode by a control unit; and
Fig. 5 is a schematic diagram illustrating the general configuration of an electrochemical reduction device according to an embodiment 2.

Hereinafter, embodiments of the invention will now be described by reference to the drawings. In the figures, like numerals represent like constituting elements and the description thereof will not be appropriately provided.

(Embodiment 1)

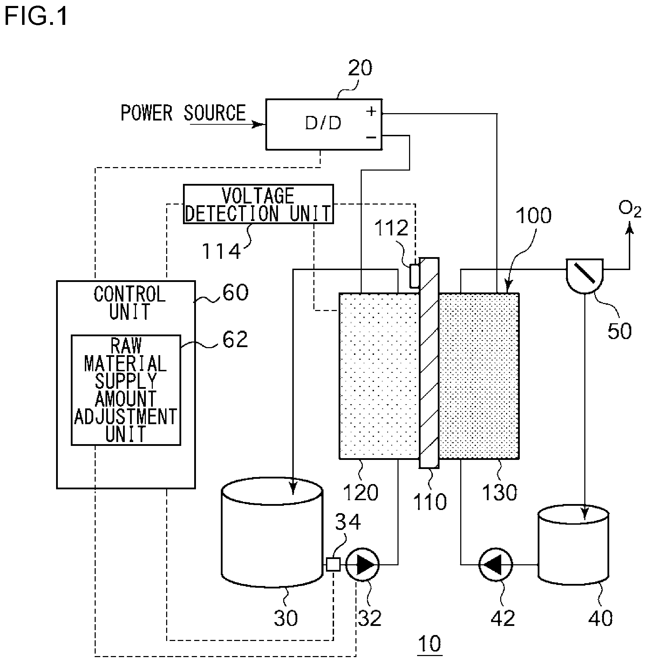

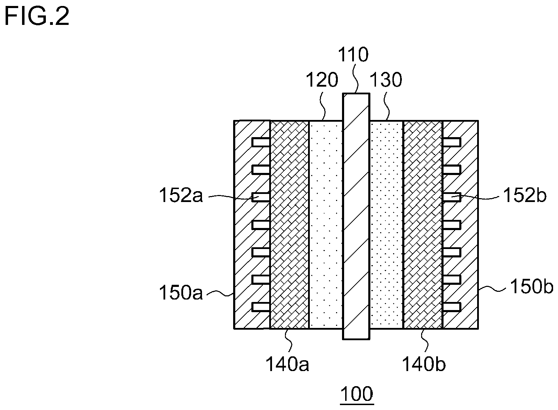

Fig. 1 is a schematic diagram illustrating the general configuration of an electrochemical reduction device 10 according to an embodiment. Fig. 2 is a diagram illustrating the general configuration of an electrode unit of the electrochemical reduction device 10 according to the embodiment.

As illustrated in Fig. 1, the electrochemical reduction device 10 includes an electrode unit 100, a power control unit 20, an organic material storage tank 30, a concentration measurement unit 34, a water storage tank 40, a gas-water separation unit 50, and a control unit 60. As illustrated in Fig. 2, the electrode unit 100 includes an electrolyte membrane 110, a reduction electrode 120, an oxygen evolving electrode 130, liquid diffusion layers 140a and 140b, and separators 150a and 150b. Hereinafter, the combination of the electrolyte membrane 110, the reduction electrode 120, the oxygen evolving electrode 130, the liquid diffusion layers 140a and 140b, and the separators 150a and 150b is called a "cell".

The power control unit 20 is, for example, a DC/DC converter for converting the output voltage of a power source into a predetermined voltage. The positive electrode output terminal of the power control unit 20 is connected to the oxygen evolving electrode (positive electrode) 130 of the electrode unit 100. The negative electrode output terminal of the power control unit 20 is connected to the reduction electrode (negative electrode) 120 of the electrode unit 100. With this configuration, a predetermined voltage is applied between the oxygen evolving electrode 130 and the reduction electrode 120 of the electrode unit 100. In addition, a reference electrode input terminal of the power control unit 20 is connected to a reference electrode 112 provided on an electrolyte membrane 110 that is described later. The outputs of the positive electrode output terminal and the negative electrode output terminal of the power control unit 20 are controlled by the control unit 60 to be the desired potentials of the oxygen evolving electrode 130 and the reduction electrode 120 based on the potential of the reference electrode 112. As the power source, electrical power derived from natural energy such as sunlight and wind power can be used. The mode of potential control of the positive electrode output terminal and the negative electrode output terminal by the control unit 60 will be described later.

The organic material storage tank 30 stores organic materials including an aromatic compound. The aromatic compound used in the present embodiment is defined in claim 1. It is to be noted that the "alkyl" of the aromatic compound is a linear or branched alkyl group having 1 to 6 carbon atoms. For example, alkylbenzenes include toluene, ethyl benzene and the like, dialkylbenzenes include xylene, diethylbenzene and the like, and trialkylbenzenes include mesitylene and the like. Alkylnaphthalenes include methylnaphthalene and the like. In the specification to be described below, the aromatic hydrocarbon compound and the nitrogen-containing heterocyclic aromatic compound used in the present invention are referred to as "aromatic compounds" in some cases. The aromatic compound is preferably a liquid at room temperature. When a mixture of two or more of the above-described aromatic compounds is used, the mixture should be a liquid. Consequently, the aromatic compound can be supplied to the electrode unit 100 in a liquid state without performing processes such as heating and pressurizing, so that the configuration of the electrochemical reduction device 10 can be simplified. When the aromatic compound is a liquid, with the viewpoint of the electrode reaction performed in the electrode unit 100 to be a practical level, the concentration of the aromatic compound in an organic liquid including the aromatic compound is 0.1% or more, preferably 0.3% or more, and more preferably 0.5% or more.

The aromatic compound stored in the organic material storage tank 30 is supplied to the reduction electrode 120 of the electrode unit 100 by a first liquid supply device 32. For the first liquid supply device 32, for example, various types of pumps such as a gear pump or a cylinder pump, or a gravity flow device or the like can be used. Instead of the aromatic compound, an N-substitution product of the above-described aromatic compound may be used. A circulation pathway is provided between the organic material storage tank 30 and the reduction electrode 120 of the electrode unit 100. The organic liquid including a benzene ring of an aromatic compound that is hydrogenated by the electrode unit 100 and an unreacted aromatic compound passes through the circulation pathway and is stored in the organic material storage tank 30. No gas is generated by a major reaction that proceeds at the reduction electrode 120 of the electrode unit 100, but when gas is additionally generated, a gas-liquid separation device may be provided in the middle of the circulation pathway.

The concentration measurement unit 34 measures the concentration of the aromatic compound in the organic liquid to be supplied to the reduction electrode 120 of the electrode unit 100. The concentration of the aromatic compound measured by the concentration measurement unit 34 is sent to the control unit 60. In this embodiment, the concentration measurement unit 34 is provided on the front of the reduction electrode 120 of the electrode unit 100 (in this embodiment, between the first liquid supply device 32 and the organic material storage tank 30), but may be provided on everywhere in the circulation pathway of the aromatic compound. When the concentration measurement unit 34 is provided on the front of the reduction electrode 120 of the electrode unit 100, from then on, the concentration of the aromatic compound to be treated in the electrode unit 100 is measured. When the concentration measurement unit 34 is provided on the outlet side of the reduction electrode 120 of the electrode unit 100, since the aromatic compound is consumed as much as the quantity of electricity flowing through the reduction electrode 120 of the electrode unit 100, the concentration of the aromatic compound in the organic liquid to be supplied to the reduction electrode 120 of the electrode unit 100 can be obtained through the revision to add the quantity of the consumption to the measured concentration.

As the concentration measurement unit 34, there may be a method for measuring in real time a concentration of an aromatic compound by an optical detective device, or a device to sense a change of dielectric constant, and a method for measuring in non-real time a concentration of an aromatic compound.

As the optical detective device, there may be a method using a difference between the optical properties of an aromatic compound as a raw material and a hydrogen adduct as a product. For example, in general, an aromatic compound has a strong absorption region at an UV region (254 nm). Therefore, the concentration of an aromatic compound can be calculated from a predetermined calibration curve by calculating absorbance from the intensity of light transmitted by the irradiation of the light with the wavelength near the UV region. For this object, it is preferable that a part of the pipeline be nearly transparent at a measurement wavelength in order to use part of the pipeline for supplying or circulating the aromatic compound for the corresponding optical detection. In addition to the UV absorption, for example, a method for converting a refractive index obtained by measuring a refractive index of an organic liquid circulating the pipeline into the concentration of an aromatic compound may be used.

As the device to accurately calculate a concentration of an aromatic compound in non-real time, a method using an analyzer such as a gas chromatography (GC), a liquid chromatography (LC), and a mass spectrum (MS) may be used. The concentration of the aromatic compound can be measured by measuring the aromatic compound using such an analyzer after sampling the organic liquid from the inside of a pipeline for supplying the aromatic compound to the reduction electrode 120 or an organic material storage tank 30. In this case, an auto-sampler may be used for sampling an organic liquid from the inside of the pipeline or the organic material storage tank 30 on a regular cycle. In addition, GC and LC may be used with MS.

The water storage tank 40 stores ion-exchanged water, purified water, and the like (hereinafter, simply referred to as "water"). Water stored in the water storage tank 40 is supplied to the oxygen evolving electrode 130 of the electrode unit 100 by a second liquid supply device 42. For the second liquid supply device 42, for example, various types of pumps such as a gear pump or a cylinder pump or a gravity flow device or the like can be used as in the case of the first liquid supply device 32. A circulation pathway is provided between the water storage tank 40 and the oxygen evolving electrode of the electrode unit 100, and water that is unreacted in the electrode unit 100 passes through the circulation pathway and is stored in the water storage tank 40. The gas-water separation unit 50 is provided in the middle of a pathway where unreacted water is sent back to the water storage tank 40 from the electrode unit 100. By the gas-water separation unit 50, oxygen evolved by the electrolysis of water in the electrode unit 100 is separated from water and discharged to outside the system.

The cell that comprises the electrode unit 100 may be one or more. When the electrode unit 100 is comprised by a plurality of cells, voltage applied between the positive electrode output terminal and negative electrode output terminal of the power control unit 20 may be determined so that the desired voltage Va is applied to each cell. In Fig. 1, the electrode unit 100 is simplified for illustration, and liquid diffusion layers 140a and 140b and separators 150a and 150b are not illustrated.

The electrolyte membrane 110 is formed of a material (ionomer) having protonic conductivity, and inhibits substances from getting mixed or being diffused between the reduction electrode 120 and the oxygen evolving electrode 130 while selectively conducting protons. The thickness of the electrolyte membrane 110 is preferably from 5 to 300 $\mu$m, more preferably from 10 to 150 $\mu$m, and most preferably from 20 to 100 $\mu$m. If the thickness of the electrolyte membrane 110 is less than 5 $\mu$m, the barrier property of the electrolyte membrane 110 is deteriorated, so that cross-leaking easily occurs. If the thickness of the electrolyte membrane 110 is more than 300 $\mu$m, ion transfer resistance becomes too large, and thus the thickness of more than 300 $\mu$m is not preferred.

The area specific resistance, that is, ion transfer resistance per geometric area, of the electrolyte membrane 110 is preferably 2000 m$\Omega\cdot$cm$^2$ or less, more preferably 1000 m$\Omega\cdot$cm$^2$ or less, and most preferably 500 m$\Omega\cdot$cm$^2$ or less. If the area specific resistance of the electrolyte membrane 110 is more than 2000 m$\Omega\cdot$cm$^2$, protonic conductivity becomes insufficient. Examples of the material having protonic conductivity (which is a cation-exchanging ionomer) include perfluorosulfonic acid polymers such as Nafion (registered trademark) and Flemion (registered trademark). The ion exchange capacity (IEC) of the cation-exchanging ionomer is preferably from 0.7 to 2 meq/g, and more preferably from 1 to 1.2 meq/g. If the ion exchange capacity of the cation-exchanging ionomer is less than 0.7 meq/g, ionic conductivity becomes insufficient. On the other hand, if the ion exchange capacity of the cation-exchanging ionomer is more than 2 meq/g, the solubility of the ionomer in water is increased, so that the strength of the electrolyte membrane 110 becomes insufficient.

On the electrolyte membrane 110, a reference electrode 112 is provided in an area spaced apart from the reduction electrode 120 and the oxygen evolving electrode 130 in such a manner that the reference electrode 112 is in contact with the electrolyte membrane 110. In other words, the reference electrode 112 is electrically isolated from the reduction electrode 120 and the oxygen evolving electrode 130. The reference electrode 112 is held at a reference electrode potential $V_{Ref}$. Examples of the reference electrode 112 include a standard hydrogen reduction electrode (reference electrode potential $V_{Ref}$ = 0 V) and an Ag/AgCl electrode (reference electrode potential $V_{Ref}$ = 0.199 V), but the reference electrode 112 is not limited thereto. The reference electrode 112 is preferably provided on the surface of the electrolyte membrane 110 on the reduction electrode 120 side.

A potential difference $\Delta V_{CA}$ between the reference electrode 112 and the reduction electrode 120 is detected by a voltage detection unit 114. The value of the potential difference $\Delta V_{CA}$ detected by the voltage detection unit 114 is input to the control unit 60.

The reduction electrode 120 is provided on one side of the electrolyte membrane 110. The reduction electrode 120 is a reduction electrode catalyst layer containing a reduction catalyst for hydrogenating a benzene ring of an aromatic compound. A reduction catalyst used for the reduction electrode 120 is not particularly limited, but includes, for example, at least one of Pt and Pd. In addition, the reduction catalyst may be composed of a metal composition which contains a first catalyst metal (noble metal) containing at least one of Pt and Pd, and one or two or more second catalyst metals selected from Cr, Mn, Fe, Co, Ni, Cu, Zn, Mo, Ru, Sn, W, Re, Pb, and Bi. In this case, the form of the metal composition is an alloy of the first catalyst metal and the second catalyst metal, or an intermetallic compound composed of the first catalyst metal and the second catalyst metal. The ratio of the first catalyst metal to the total mass of the first catalyst metal and the second catalyst metal is preferably from 10 to 95 wt%, more preferably from 20 to 90 wt%, and most preferably from 25 to 80 wt%. If the ratio of the first catalyst metal is less than 10 wt%, durability may be deteriorated from the perspective of resistance to dissolving or the like. On the other hand, if the ratio of the first catalyst metal is more than 95 wt%, the properties of the reduction catalyst become closer to those of a noble metal alone, and therefore the electrode activity becomes insufficient. In the following explanation, the first catalyst metal and the second catalyst metal are collectively referred to as "catalyst metals" in some cases.

The above-described catalyst metals may be supported by a conductive material (support). The electrical conductivity of the conductive material is preferably $1.0 \times 10^{-2}$ S/cm or more, more preferably $3.0 \times 10^{-2}$ S/cm or more, and most preferably $1.0 \times 10^{-1}$ S/cm or more. If the electrical conductivity of the conductive material is less than $1.0 \times 10^{-2}$ S/cm, sufficient conductivity cannot be imparted. Examples of the conductive material include conductive materials containing any one of a porous carbon, a porous metal, and a porous metal oxide as a major component. Examples of the porous carbon include carbon black such as Ketjenblack (registered trademark), acetylene black, and Vulcan (registered trademark). The BET specific surface area of the porous carbon measured by a nitrogen adsorption method is preferably 100 $m^2$/g or more, more preferably 150 $m^2$/g or more, and most preferably 200 $m^2$/g or more. If the BET specific surface area of the porous carbon is less than 100 $m^2$/g, it is difficult to uniformly support the catalyst metals. Therefore, the rate of utilization of a catalyst metal surface is lowered, causing catalyst performance to be degraded. Examples of the porous metal include Pt black, Pd black, a Pt metal deposited in a fractal shape, and the like. Examples of the porous metal oxide include oxides of Ti, Zr, Nb, Mo, Hf, Ta and W. In addition, examples of the porous conductive material for supporting a catalyst metal include nitrides, carbides, oxynitrides, carbonitrides, partially-oxidized carbonitrides of metals such as Ti, Zr, Nb, Mo, Hf, Ta, and W (hereinafter, they are collectively referred to as porous metal carbonitrides and the like). The BET specific surface areas of the porous metal, the porous metal oxide, the porous metal carbonitrides and the like measured by a nitrogen adsorption method are preferably 1 $m^2$/g or more, more preferably 3 $m^2$/g or more, and most preferably 10 $m^2$/g or more. If the respective BET specific surface areas of the porous metal, the porous metal oxide, the porous metal carbonitrides and the like is less than 1 $m^2$/g, it is difficult to uniformly support the catalyst metals. Therefore, the rate of utilization of a catalyst metal surface is lowered, causing catalyst performance to be degraded.

Depending on the type and composition of the first catalyst metal and the second catalyst metal, a simultaneous impregnation method in which the support is impregnated with the first catalyst metal and the second catalyst metal at the same time, or a sequential impregnation method in which the support is impregnated with the first catalyst metal, followed by impregnating the support with the second catalyst metal can be employed as a method for supporting the catalyst metals on the support. In the case of the sequential impregnation method, after the first catalyst metal is supported on the support, a heat treatment or the like may be performed once, followed by supporting the second catalyst metal on the support. After the impregnation of both the first catalyst metal and the second catalyst metal is completed, the first catalyst metal and the second catalyst metal are alloyed with each other or an intermetallic compound composed of the first catalyst metal and the second catalyst metal is formed by a heat treatment process.

To the reduction electrode 120, a material having conductivity, such as the aforementioned conductive oxide or carbon black may be added in addition to a conductive compound on which a catalyst metal is supported. Consequently, the number of electron-conducting paths among reduction catalyst particles can be increased, and thus resistance per geometric area of a reduction catalyst layer can be lowered in some cases.

The reduction electrode 120 may include a fluorine-based resin such as polytetrafluoroethylene (PTFE) as an additive.

The reduction electrode 120 may contain an ionomer having protonic conductivity. The reduction electrode 120 preferably contains ionically conducting materials (ionomers) having a structure that is identical or similar to that of the above-described electrolyte membrane 110 in a predetermined mass ratio. This allows the ionic conductivity of the reduction electrode 120 to be improved. In particular, in the case where a catalyst support is porous, the reduction electrode 120 makes a significant contribution to the improvement of the ionic conductivity by containing an ionomer that has protonic conductivity. Examples of the ionomer having protonic conductivity (which is a cation-exchanging ionomer) include perfluorosulfonic acid polymers such as Nafion (registered trademark) and Flemion (registered trademark). The ion exchange capacity (IEC) of the cation-exchanging ionomer is preferably from 0.7 to 3 meq/g, more preferably from 1 to 2.5 meq/g, and most preferably from 1.2 to 2 meq/g. When the catalyst metal is supported on porous carbon (carbon support), a mass ratio I/C of the cation-exchanging ionomer (I) to the carbon support (C) is preferably from 0.1 to 2, more preferably from 0.2 to 1.5, and most preferably from 0.3 to 1.1. It is difficult to obtain sufficient ionic conductivity if the mass ratio I/C is less than 0.1. On the other hand, if the mass ratio I/C is more than 2, the thickness of an ionomer coating over the catalyst metal is increased to inhibit the aromatic compound as a reactant from contacting a catalyst-active site, or the electron conductivity is decreased to reduce the electrode activity.

Preferably, the ionomer contained in the reduction electrode 120 partially covers a reduction catalyst. This allows three elements (an aromatic compound, a proton, and an electron), which are necessary for an electrochemical reaction at the reduction electrode 120, to be efficiently supplied to a reaction field.

The liquid diffusion layer 140a is laminated on the surface of the reduction electrode 120 on a side opposite to the electrolyte membrane 110. The liquid diffusion layer 140a plays a function of uniformly diffusing, to the reduction electrode 120, a liquid aromatic compound supplied from the separator 150a that is described later. As the liquid diffusion layer 140a, for example, carbon paper or carbon cloth is used.

The separator 150a is laminated on the surface of the liquid diffusion layer 140a on a side opposite to the electrolyte membrane 110. The separator 150a is formed of a carbon resin, or an anticorrosion alloy of Cr-Ni-Fe, Cr-Ni-Mo-Fe, Cr-Mo-Nb-Ni, Cr-Mo-Fe-W-Ni or the like. One or more groove-like flow channels 152a are provided on the surface of the separator 150a on the liquid diffusion layer 140a side. The liquid aromatic compound supplied from the organic material storage tank 30 circulates through the flow channel 152a, and the liquid aromatic compound penetrates into the liquid diffusion layer 140a from the flow channel 152a. The form of the flow channel 152a is not particularly limited, but for example, a straight flow channel or a serpentine flow channel can be employed. When a metal material is used for the separator 150a, the separator 150a may be a structure formed by sintering a sphere-like or pellet-like metal fine powder.

The oxygen evolving electrode 130 is provided on the other side of the electrolyte membrane 110. As the oxygen evolving electrode 130, one that contains a catalyst based on a noble metal oxide such as $RuO_2$ or $IrO_2$ is suitably used. These catalysts may be supported in a dispersed manner or coated on a metal substrate such as a metal wire or mesh of metals such as Cr, Mn, Fe, Co, Ni, Cu, Zn, Nb, Mo, Ta, and W or of alloys composed primarily of these metals. In particular, since $IrO_2$ is expensive, manufacturing costs can be lowered by coating the metal substrate with a thin film when $IrO_2$ is used as a catalyst.

The liquid diffusion layer 140b is laminated on the surface of the oxygen evolving electrode 130 on a side opposite to the electrolyte membrane 110. The liquid diffusion layer 140b plays a function of uniformly diffusing, to the oxygen evolving electrode 130, water supplied from the separator 150b that is described later. As the liquid diffusion layer 140b, for example, carbon paper or carbon cloth is used.

The separator 150b is laminated on the surface of the liquid diffusion layer 140b on a side opposite to the electrolyte membrane 110. The separator 150b is formed of an anticorrosion alloy of Cr/Ni/Fe, Cr/Ni/Mo/Fe, Cr/Mo/Nb/Ni, Cr/Mo/Fe/W/Ni, or the like or of a material formed by coating the surfaces of these metals with an oxide layer. One or more groove-like flow channels 152b are provided on the surface of the separator 150b on the liquid diffusion layer 140b side. Water supplied from the water storage tank 40 circulates through the flow channel 152b, and the water penetrates into the liquid diffusion layer 140b from the flow channel 152b. The form of the flow channel 152b is not particularly limited, but for example, a straight flow channel or a serpentine flow channel can be employed. When a metal material is used for the separator 150b, the separator 150b may be a structure formed by sintering a sphere-like or pellet-like metal fine powder.

In the present embodiment, liquid water is supplied to the oxygen evolving electrode 130, but a humidified gas (for example, air) may be used in place of the liquid water. In this case, the dew-point temperature of the humidified gas is preferably from room temperature to 100°C, and more preferably from 50 to 100°C.

When toluene is used as the aromatic compound, reactions in the electrode unit 100 are as follows.

<Electrode Reaction at Oxygen Evolving Electrode>

$$3H_2O \rightarrow 1.5O_2 + 6H^+ + 6e^- : E_0 = 1.23 \text{ V}$$

<Electrode Reaction at Reduction Electrode>

$$\text{toluene} + 6H^+ + 6e^- \rightarrow \text{methylcyclohexane} : E_0 = 0.153 \text{ V (vs RHE)}$$

In other words, the electrode reaction at the oxygen evolving electrode 130 and the electrode reaction at the reduction electrode 120 proceeds in parallel, and protons evolved by electrolysis of water are supplied to the reduction electrode 120 via the electrolyte membrane 110 in the electrode reaction at the oxygen evolving electrode 130, and used for hydrogenation of at least one benzene ring of the aromatic compound in the electrode reaction at the reduction electrode 120.

Referring back to Fig. 1, the control unit 60 controls the power control unit 20 so as to satisfy a relation of $V_{HER} - V_{allow} \leq V_{CA} \leq V_{TRR}$ when the potential at a reversible hydrogen electrode, the standard redox potential of the aromatic compound, the potential of the reduction electrode 120, and the potential difference for setting the lower limit potential used for determining the lower limit acceptable potential of the potential $V_{CA}$ are expressed as $V_{HER}$, $V_{TRR}$, $V_{CA}$, and $V_{allow}$, respectively. If the potential $V_{CA}$ is lower than $V_{HER} - V_{allow}$, competition with a hydrogen generation reaction occurs, and the reduction selectivity of the aromatic compound becomes insufficient, and thus the potential $V_{CA}$ lower than $V_{HER} - V_{allow}$ is not preferred. On the other hand, if the potential $V_{CA}$ is higher than the standard redox potential $V_{TRR}$, the hydrogenation of at least one benzene ring of the aromatic compound is not proceeded in a sufficient reaction rate in practical use, and thus the potential $V_{CA}$ higher than the standard redox potential $V_{TRR}$ is not preferred. In other words, by setting the potential $V_{CA}$ within the range that satisfies the above-described relation expression, an electrochemical reaction can be made to proceed at both the electrodes and the hydrogenation of at least one benzene ring of the aromatic compounds can be industrially practiced. The potential difference $V_{allow}$ for setting the lower limit potential may be determined by adding the concentration of the aromatic compound and/or supply amount of the organic liquid.

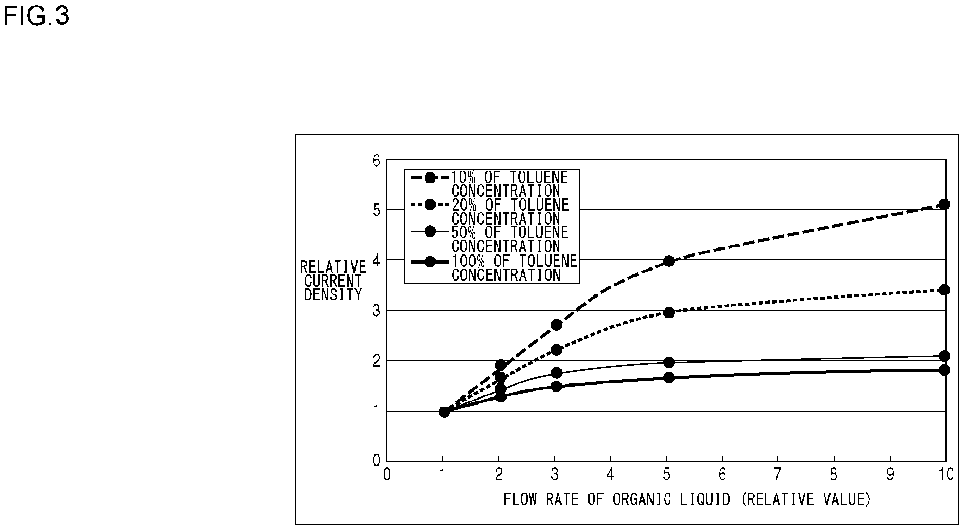

The inventors performed the experiment, in which the amount of the organic liquid to be supplied to the reduction electrode 120 is increased in a case in which the aromatic compound has a predetermined concentration. Fig. 3 is a graph illustrating dependence of the current density to the amount of toluene circulation when the concentration of toluene is changed. As illustrated in Fig. 3, it is confirmed that the current density is increased by increasing the circulation amount of the organic liquid under the respective conditions of 100%, 50%, 20%, and 10% of the toluene concentrations. It is also found that as the toluene concentration is low, the rising degree of the current density is high to the increase in the circulation amount of the organic liquid. Based on this knowledge, a method of adjusting the supply amount of the organic liquid including the aromatic compound will be described.

The control unit 60 has a raw material supply amount adjustment unit 62 that adjusts the amount of the aromatic compound to be supplied to the reduction electrode 120 per unit time based on the concentration of the aromatic compound measured by the concentration measurement unit 34. Specifically, as the concentration of the aromatic compound becomes lower, the raw material supply amount adjustment unit 62 increases the flow amount of the organic liquid including the aromatic compound that flows in the circulation pathway by controlling the first liquid supply device 32. For example, the relation between the concentration of the aromatic compound and the amount of the organic liquid to be supplied to the reduction electrode 120 is held at a memory, such as ROM as data, and then the raw material supply amount adjustment unit 62 controls the first liquid supply device 32 by referring properly such data.

In addition, the following reaction conditions are used for the hydrogenation of at least one benzene ring of the aromatic compound using the electrochemical reduction device 10. The temperature of the electrode unit 100 is preferably from room temperature to 100°C, and more preferably from 40 to 80°C. If the temperature of the electrode unit 100 is lower than room temperature, the proceeding of the electrolytic reaction may be slowed down, or an enormous amount of energy is required to remove heat generated as the reaction proceeds, and thus the temperature lower than room temperature is not preferred. On the other hand, if the temperature of the electrode unit 100 is higher than 100°C, water is brought to a boil at the oxygen evolving electrode 130 and the vapor pressure of an organic material is increased at the reduction electrode 120, and thus the temperature higher than 100°C is not preferred for the electrochemical reduction device 10 in which reactions of the both electrodes are performed in a liquid phase. The reduction electrode potential $V_{CA}$ is a true electrode potential, and thus may be different from a potential $V_{CA\_actual}$ that is actually measured. If there are resistance components, among various resistance components that exist in an electrolytic tank used in the embodiment, that correspond to ohmic resistance, a resistance value per electrode area of the entirety of these components is set to be the entire ohmic resistance $R_{ohmic}$, and the true electrode potential $V_{CA}$ is calculated in accordance with the following expression.

$$V_{CA} = V_{CA\_actual} + R_{ohmic} \times J \text{ (current density)}$$

Examples of the ohmic resistance include proton transfer resistance of the electrolyte membrane, electron transfer resistance of the electrode catalyst layer, and, furthermore, contact resistance on an electric circuit.

Here, $R_{ohmic}$ can be determined as an actual resistance component on an equivalent circuit by using an alternating-current impedance measurement or an alternating-current resistance measurement at a fixed frequency, but once the configuration of an electrolytic tank and a material system to be used are determined, a method may also be used in which $R_{ohmic}$ is used in the following control while $R_{ohmic}$ is considered as an almost stationary value.

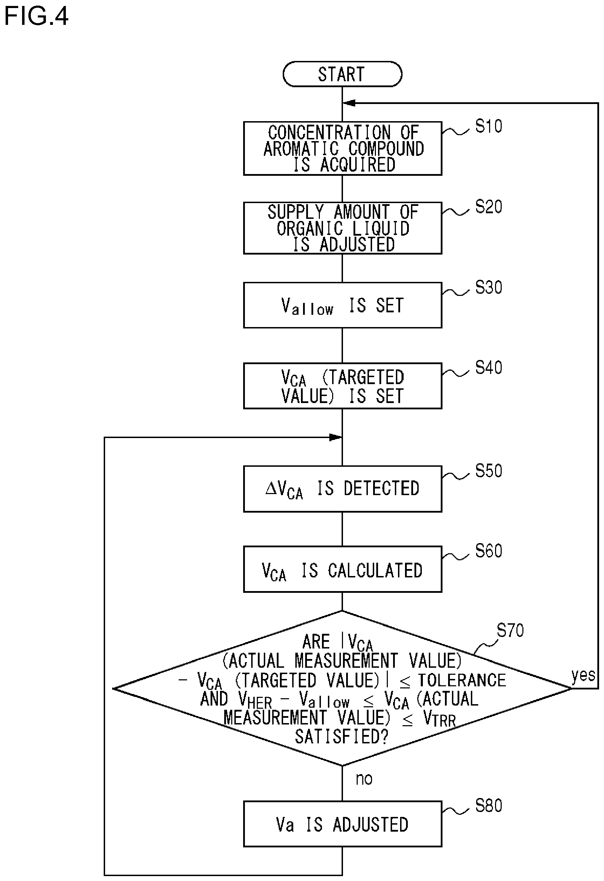

Fig. 4 is a flowchart illustrating an example of potential control of the reduction electrode 120 by the control unit 60. The mode of potential control of the reduction electrode 120 will be described below by using, as an example, a case where an Ag/AgCl electrode (reference electrode potential $V_{Ref} = 0.199$ V) is used as the reference electrode 112.

First, the concentration measurement unit 34 measures the concentration of the aromatic compound in an organic liquid to be supplied to the reduction electrode 120 (S10). Next, the raw material supply amount adjustment unit 62 adjusts the amount of the organic liquid to be supplied to the reduction electrode 120 based on the concentration of the aromatic compound measured by the concentration measurement unit 34 (S20). In general, as the hydrogenation of at least one benzene ring of the aromatic compound progresses, the concentration of the aromatic compound in the organic liquid in the circulation pathway is decreased. In this way, the raw material supply amount adjustment unit 62 increases the flow rate of the organic liquid including the aromatic compound that flows in the circulation pathway. For example, the raw material supply amount adjustment unit 62 controls properly the flow rate of the organic liquid according to the concentration of the aromatic compound by referring the corresponding relation that is stored in advance in a memory such as a ROM between the concentration of the aromatic compound and the flow rate of the organic liquid. In addition, as the corresponding relation between the concentration of the aromatic compound and the flow rate of the organic liquid, there are the relation, in which as the concentration of the aromatic compound is decreased, the flow rate of the organic liquid is continuously increased, or the relation, in which as the concentration of the aromatic compound is decreased, the flow rate of the organic liquid is gradationally increased. In the latter case, for example, when the concentrations of the aromatic compound are 50% or more and 100% or less, 20% or more and less than 50%, 10% or more and less than 20%, and 5% or more and less than 10%, the relative values of the flow rates of the organic liquids including the aromatic compounds are 1, 2, 3, and 5, respectively.

Next, the control unit 60 sets a potential difference $V_{allow}$ for setting the lower limit potential (S30). At this time, as the flow rate of the aromatic compound becomes higher, the value of the potential difference $V_{allow}$ for setting the lower limit potential may be increased. In addition, the control unit 60 sets the potential $V_{CA}$ (targeted value) that satisfies $V_{HER} - V_{allow} \leq V_{CA} \leq V_{TRR}$ using the potential difference $V_{allow}$ for setting the lower limit potential that is set (S40).

Next, the voltage detection unit 114 detects the potential difference $\Delta V_{CA}$ between the reference electrode 112 and the reduction electrode 120 (S50).

Next, the control unit 60 calculates a potential $V_{CA}$ (actual measurement value) of the reduction electrode 120 using (expression) $V_{CA} = \Delta V_{CA} - V_{Ref} = \Delta V_{CA} - 0.199$ V (S60).

Next, whether the potential $V_{CA}$ (actual measurement value) satisfies the following expressions (1) and (2) is determined (S70).

$$\left| \text{Potential } V_{CA} \text{ (actual measurement value)} - \text{Potential } V_{CA} \text{ (targeted value)} \right| \leq \text{Tolerance} \cdots (1)$$

$$V_{HER} - V_{allow} \leq V_{CA} \text{ (actual measurement value)} \leq V_{TRR} \cdots (2)$$

In the expression (1), the tolerance is, for example, 1 mV.

If the potential $V_{CA}$ (actual measurement value) satisfies the expressions (1) and (2), S70 progresses to "yes" so as to measure the concentration of the aromatic compound again. On the other hand, if the potential $V_{CA}$ (actual measurement value) does not satisfy at least one of the expressions (1) and (2), S70 progresses to "no" so as to adjust the voltage Va applied between the reduction electrode 120 and the oxygen evolving electrode 130 (S80). After adjustment of the voltage Va, the process goes back to the process of (S50) described above.

Here, an example of the adjustment of the potential Va is described. For example, in case of Potential $V_{CA}$ (actual measurement value) - Potential $V_{CA}$ (targeted value) > Tolerance, the control unit 60 sends an instruction to the power control unit 20 so as to increase the voltage Va by only 1 mV. In addition, as a result of increasing the voltage Va, even when |Potential $V_{CA}$ (actual measurement value) - Potential $V_{CA}$ (targeted value)| $\leq$ Tolerance is satisfied, in case of $V_{CA}$ (actual measurement value) < $V_{HER} - V_{allow}$, the expression (2) is not satisfied, and thus in the next process, the control unit 60 allows the voltage Va to decrease by 1 mV.

On the other hand, in case of Potential $V_{CA}$ (actual measurement value) - Potential $V_{CA}$ (targeted value) < -Tolerance, the control unit 60 sends an instruction to the power control unit 20 so as to decrease the voltage Va by only 1 mV. In addition, as a result of decreasing the voltage Va, even when |Potential $V_{CA}$ (actual measurement value) - Potential $V_{CA}$ (targeted value)| $\leq$ Tolerance is satisfied, in case of $V_{CA}$ (actual measurement value) > $V_{TRR}$, the expression (2) is not satisfied, and thus in the next process, the control unit 60 allows the voltage Va to increase by 1 mV. In this way, the control unit 60 adjusts the voltage Va until the voltage Va finally satisfies the expressions (1) and (2).

In addition, the value (adjustment range) for decreasing or increasing the voltage Va is not limited to 1 mV. For example, the adjustment range of the voltage Va may be set to correspond the above-mentioned tolerance in the first round of adjustment of the voltage Va, and the adjustment range of the voltage Va may be set to, for example, one-fourth of the above-described tolerance in the second and subsequent rounds of adjustment of the voltage Va. This allows the potential $V_{CA}$ (actual measurement value) to be quickly adjusted within a range that satisfies the expressions (1) and (2).

According to the electrochemical reduction device 10 as described above, as compared with case of being the amount of the organic liquid to be supplied to the reduction electrode 120 in a constant amount regardless of the concentration of the aromatic compound, the time when the rate of the hydrogenation of at least one benzene ring of the aromatic compound is to be the targeted rate can be shortened, and also the efficiency of the hydrogenation of at least one benzene ring of the aromatic compound can be improved. In addition, according to the electrochemical reduction device 10, the risk of the hydrogen generation can be decreased.

(Embodiment 2)

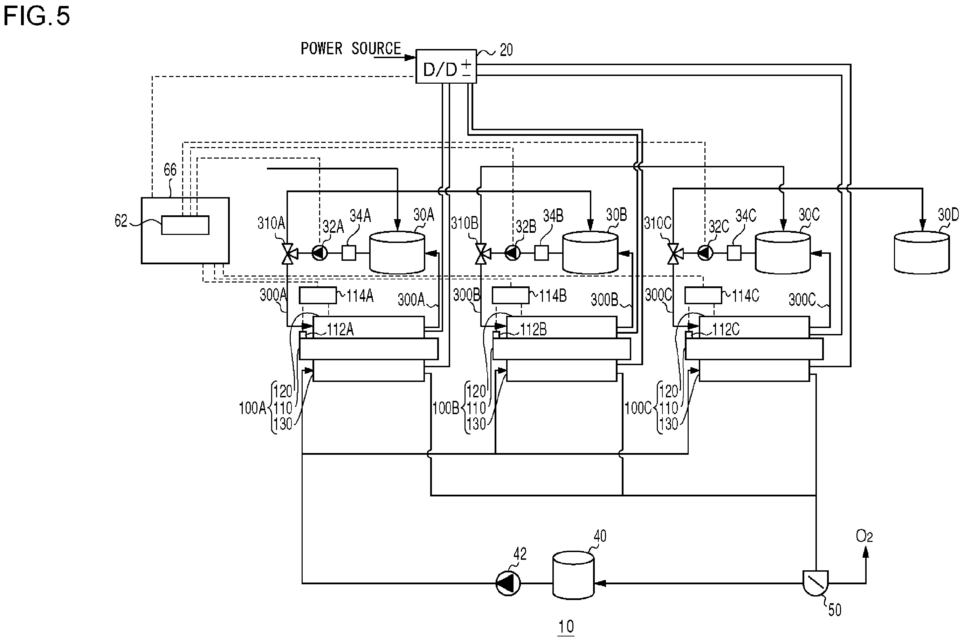

Fig. 5 is a schematic diagram illustrating the general configuration of an electrochemical reduction device according to an embodiment 2. As illustrated in Fig. 5, the electrochemical reduction device 10 includes electrode units 100A, 100B, and 100C, which are each independent. In the present embodiment, the number N of the electrode units 100 is three, but the number N may be any number as long as it is equal to or more than two. The configuration of each electrode unit 100 is similar to the configuration in the embodiment 1, and the explanation about them will not be appropriately provided. In Fig. 5, the electrode unit 100 is simplified for illustration, and the liquid diffusion layers 140a and 140b and the separators 150a and 150b illustrated in Fig. 2 are not illustrated.

In the present embodiment, the power control unit 20 applies a voltage Va (A), a voltage Va (B), and a voltage Va (C) between the oxygen evolving electrode and the reduction electrode of each of the electrode units 100. In addition, the control unit 60 sets a potential difference $V_{allow}$ (A) for setting the lower limit potential, a potential difference $V_{allow}$ (B) for setting the lower limit potential, and a potential difference $V_{allow}$ (C) for setting the lower limit potential, each independently, for the respective electrode units 100. In addition, the reference electrode input terminals of the power control units 20 that are provided on the respective electrode units 100 are connected to the reference electrode 112A, the reference electrode 112B, and the reference electrode 112C, which are each provided on electrolyte membranes 110 of the respective electrode units 100. The output of the reference electrode input terminal of the power control unit 20 is controlled by the control unit 60 to be desired potentials of the oxygen evolving electrode 130 and the reduction electrode 120 based on the potentials of the respective reference electrodes 112.

The circulation pathways 300A, 300B, and 300C via the reduction electrodes 120 of the electrode units 100 and organic material storage tanks are provided at the respective electrode units 100. The circulation pathways 300B and 300C are the same as the circulation pathway 300A, and thus the circulation pathway 300A will be described with illustration below, and descriptions about the circulation pathways 300B and 300C will not be appropriately provided. The circulation pathway 300A is a pipeline for circulating the organic liquid including the aromatic compound between the organic material storage tank 30A and the reduction electrode 120 of the electrode unit 100A. The concentration measurement unit 34A, the first liquid supply device 32A, and a three-way valve 310A are provided in order on the downstream side of the organic material storage tank 30A.

The three-way valve 310A can switch between a pathway from the first liquid supply device 32A to the reduction electrode 120 of the electrode unit 100A and a pathway from the first liquid supply device 32A to the organic material storage tank 30B. A three-way valve 310B provided on the circulation pathway 300B can switch between a pathway from the first liquid supply device 32B to the reduction electrode 120 of the electrode unit 100B and a pathway from the first liquid supply device 32B to the organic material storage tank 30C. In addition, a three-way valve 310C provided on the circulation pathway 300C can switch between a pathway from the first liquid supply device 32C to the reduction electrode 120 of the electrode unit 100C and a pathway from the first liquid supply device 32C to the organic material storage tank 30D. The organic material storage tank 30D stores a final product treated by an electrode unit assembly 200. In the present embodiment, the three-way valves 310A to 310C are a solenoid valve controlled by the control unit 60.

A circulation pathway for water is provided between the water storage tank 40 and the oxygen evolving electrode 130 of each electrode unit 100. Water stored in the water storage tank 40 is supplied to the oxygen evolving electrode 130 of each electrode unit 100 by a second liquid supply device 42. Specifically, a pipeline that comprises the circulation pathway for water is branched on the downstream side of the second liquid supply device 42, and distributes and supplies water to the oxygen evolving electrode 130 of each electrode unit 100. In each electrode unit 100, unreacted water merges into the pipeline that communicates with the water storage tank 40, then passes through the pipeline, and is stored in the water storage tank 40.

Like the embodiment 1, a reference electrode 112 is provided on the electrolyte membrane 110 of each electrode unit 100 so as to connect with the electrolyte membrane 110 in an area spaced apart from the reduction electrode 120 and the oxygen evolving electrode 130.

A potential difference $\Delta V_{CA}$ between the reference electrode 112A and the reduction electrode 120 of the electrode unit 100A is detected by a voltage detection unit 114A. The value of the potential difference $\Delta V_{CA}$ detected by the voltage detection unit 114A is input to the control unit 60. The control unit 60 acquires a potential $V_{CA}$ (A) of the reduction electrode 120 of the electrode unit 100A based on a potential $V_{Ref}$ of the reference electrode 112A and the potential difference $\Delta V_{CA}$ detected by the voltage detection unit 114A.

A potential difference $\Delta V_{CA}$ between the reference electrode 112B and the reduction electrode 120 of the electrode unit 100B is detected by a voltage detection unit 114B. The value of the potential difference $\Delta V_{CA}$ detected by the voltage detection unit 114B is input to the control unit 60. The control unit 60 acquires a potential $V_{CA}$ (B) of the reduction electrode 120 of the electrode unit 100B based on a potential $V_{Ref}$ of the reference electrode 112B and the potential difference $\Delta V_{CA}$ detected by the voltage detection unit 114B.

In addition, a potential difference $\Delta V_{CA}$ between the reference electrode 112C and the reduction electrode 120 of the electrode unit 100C is detected by a voltage detection unit 114C. The value of the potential difference $\Delta V_{CA}$ detected by the voltage detection unit 114C is input to the control unit 60. The control unit 60 acquires a potential $V_{CA}$ (C) of the reduction electrode 120 of the electrode unit 100C based on a potential $V_{Ref}$ of the reference electrode 112C and the potential difference $\Delta V_{CA}$ detected by the voltage detection unit 114C.

The benzene ring of the aromatic compound that is supplied to the organic material storage tank 30A is hydrogenated at the reduction electrode 120 of the electrode unit 100A during being circulated in the circulation pathway 300A by the first liquid supply device 32A, and thus gradually becomes a hydride in which a benzene ring is hydrogenated. Therefore, the concentration of the aromatic compound in an organic liquid including the aromatic compound and the hydride thereof is decreased. The control unit 60 controls the three-way valve 310A such that the organic liquid is circulated in the circulation pathway 300A until the concentration of the aromatic compound measured by the concentration measurement unit 34A becomes a predetermined concentration lower limit value. For example, when the aromatic compound of a 100% concentration is supplied to the organic material storage tank 30A as a raw material, the circulation pathway 300A is formed until the concentration becomes 50%. In the meantime, the control unit 60 increases the flow rate of the organic liquid that is circulated in the circulation pathway 300A as the concentration of the aromatic compound is decreased.

Next, when the concentration of the aromatic compound measured by the concentration measurement unit 34A reaches a predetermined concentration lower limit value, the control unit 60 controls the three-way valve 310A so as to open a pathway from the first liquid supply device 32A to the organic material storage tank 30B. For this reason, the organic liquid in the circulation pathway 300A is stored in the organic material storage tank 30B.

The benzene ring of the aromatic compound included in the organic liquid supplied to the organic material storage tank 30B is hydrogenated at the reduction electrode 120 of the electrode unit 100B during being circulated in the circulation pathway 300B by the first liquid supply device 32B, and thus the concentration of the aromatic compound in the organic liquid is gradually decreased. The control unit 60 controls the three-way valve 310B such that the organic liquid is circulated in the circulation pathway 300B until the concentration of the aromatic compound measured by the concentration measurement unit 34B becomes a predetermined concentration lower limit value. For example, when the aromatic compound of a 50% concentration is supplied to the first liquid supply device 32B, the circulation pathway 300B is formed until the concentration becomes 20%. In the meantime, the control unit 60 increases the flow rate of the organic liquid that is circulated in the circulation pathway 300B as the concentration of the aromatic compound is decreased.

Next, when the concentration of the aromatic compound measured by the concentration measurement unit 34B reaches a predetermined concentration lower limit value, the control unit 60 controls the three-way valve 310B so as to open a pathway from the first liquid supply device 32B to the organic material storage tank 30C. For this reason, the organic liquid in the circulation pathway 300B is stored in the organic material storage tank 30C.

The benzene ring of the aromatic compound included in the organic liquid supplied to the organic material storage tank 30C is hydrogenated at the reduction electrode 120 of the electrode unit 100C during being circulated in the circulation pathway 300C by the first liquid supply device 32C, and thus the concentration of the aromatic compound in the organic liquid is gradually decreased. The control unit 60 controls the three-way valve 310C such that the organic liquid is circulated in the circulation pathway 300C until the concentration of the aromatic compound measured by the concentration measurement unit 34C becomes a predetermined concentration lower limit value. For example, when the aromatic compound of a 20% concentration is supplied to the first liquid supply device 32C, the circulation pathway 300C is formed until the concentration becomes 5%. In the meantime, the control unit 60 increases the flow rate of the organic liquid that is circulated in the circulation pathway 300C as the concentration of the aromatic compound is decreased.

Next, when the concentration of the aromatic compound measured by the concentration measurement unit 34C reaches a predetermined concentration lower limit value, the control unit 60 controls the three-way valve 310C so as to open a pathway from the first liquid supply device 32C to the organic material storage tank 30D. For this reason, the organic liquid in the circulation pathway 300C is stored in the organic material storage tank 30D. In this way, the benzene ring of the aromatic compound that is supplied as a raw material is hydrogenated by passing through the reduction electrode 120 of the electrode unit 100A, the reduction electrode 120 of the electrode unit 100B, and the reduction electrode 120 of the electrode unit 100C in order, and then stored in the organic material storage tank 30D.

As described above, the concentrations of the aromatic compounds are decreased in the order of the circulation pathway 300A, the circulation pathway 300B, and the circulation pathway 300C. Therefore, the amounts of the organic liquid to be supplied to the reduction electrodes 120 of the respective electrode units are set to be high in the order of the electrode unit 100C, the electrode unit 100B, and the electrode unit 100A.

In addition, the control unit 60 controls the power control unit 20 so as to satisfy $Va \geq (V_{OER} - V_{CA})$ with respect to each electrode unit 100. For this reason, in each electrode unit 100, the potential $V_{AN}$ is held to be equal to or higher than the oxygen evolving equilibrium potential $V_{OER}$.

According to the above-described electrochemical reduction device 10, as compared with case of being the amount of the organic liquid to be supplied to the reduction electrode 120 in a constant amount regardless of the concentration of the aromatic compound of each of the electrode unit 100, the time when the rate of the hydrogenation of at least one benzene ring of the aromatic compound is to be the targeted rate can be shortened. In addition, when the amounts of the organic liquids to be supplied to the reduction electrodes 120 of the respective electrode units 100 are set to be the same, the time when the hydrogenation of at least one benzene ring is performed until being the targeted rate in the electrode unit 100 of the downstream side becomes longer, but in the present embodiment, the times when the hydrogenations of the benzene ring are performed until being the targeted rate in the respective electrode units 100 can be set to be the same. Therefore, after the benzene ring of the aromatic compounds in the respective electrode units 100 are hydrogenated until being the targeted rates, the organic liquid can be transferred to the electrode unit 100 of the downstream side immediately without waiting the process of the electrode unit 100 of the downstream side. Therefore, it can contribute to the quickness of the hydrogenation of at least one benzene ring of the aromatic compound, and also can contribute to the efficiency of the hydrogenation of at least one benzene ring of the aromatic compound.

The present invention is not limited to the above-mentioned embodiments, and various modifications, such as a design change, can be added thereto based on knowledge of those skilled in the art, and any embodiment to which such modifications are added can also be included in the scope of the present invention.

In the above-described embodiments, the reduction electrode 120 contains an ionomer having protonic conductivity, but the reduction electrode 120 may contain an ionomer having hydroxy ion conductivity.


**Claims**

1.    An electrochemical reduction device (10) comprising:

an organic material storage tank (30) that stores an organic liquid including an aromatic compound, wherein the aromatic compound is an aromatic hydrocarbon compound or a nitrogen-containing heterocyclic aromatic compound selected from the group consisting of benzene, naphthalene, anthracene, diphenylethane, pyridine, pyrimidine, pyrazine, quinoline, isoquinoline, N-alkylpyrrole, N-alkylindole, N-alkyldibenzopyrrole, 1 to 4 hydrogen atoms of an aromatic ring of the aromatic hydrocarbon or nitrogen-containing heterocyclic aromatic compound being substituted by an alkyl group having 1 to 6 carbon atoms;
an electrode unit (100) including an electrolyte membrane (110) having ionic conductivity, a reduction electrode (120) that is provided on one side of the electrolyte membrane (110) and that contains a reduction catalyst for hydrogenating at least one benzene ring of the aromatic compound, and an oxygen evolving electrode (130) that is provided on the other side of the electrolyte membrane (110);
a power control unit (20) for applying a voltage Va between the reduction electrode (120) and the oxygen evolving electrode (130); wherein the electrochemical reduction device (10) is further **characterized by**
a circulation pathway that connects the organic material storage tank (30) and the reduction electrode (120) of the electrode unit (100), the organic liquid passing through the circulation pathway;
a concentration measurement unit (34) for measuring a concentration of the aromatic compound to be supplied to the reduction electrode (120); and
a raw material supply amount adjustment unit (62) for adjusting the amount of the organic liquid including the aromatic compound to be supplied to the reduction electrode (120) per unit time based on the concentration of the aromatic compound measured by the concentration measurement unit (34), wherein the raw material supply amount adjustment unit (62) is configured to increase the amount of the organic liquid to be supplied to the reduction electrode (120) when the concentration of the aromatic compound is decreased.

2. A method for manufacturing a hydride of an aromatic compound, wherein the aromatic compound is an aromatic hydrocarbon compound or a nitrogen-containing heterocyclic aromatic compound selected from the group consisting of benzene, naphthalene, anthracene, diphenylethane, pyridine, pyrimidine, pyrazine, quinoline, isoquinoline, N-alkylpyrrole, N-alkylindole, N-alkyldibenzopyrrole, 1 to 4 hydrogen atoms of an aromatic ring of the aromatic hydrocarbon or nitrogen-containing heterocyclic aromatic compound being substituted by an alkyl group having 1 to 6 carbon atoms, the method comprising:

introducing the aromatic compound to the reduction electrode (120) side of the electrode unit (100);
circulating water or a humidified gas to the oxygen evolving electrode (130) side; and
hydrogenating at least one benzene ring of the aromatic compound introduced to the reduction electrode (120) side, by using the electrochemical reduction device (10) according to claim 1.

## Patentansprüche

1. Elektrochemische Reduktionsvorrichtung (10), umfassend:

einen Lagertank (30) für organische Stoffe, in dem eine organische Flüssigkeit einschließlich einer aromatischen Verbindung gelagert wird, wobei die aromatische Verbindung eine aromatische Kohlenwasserstoffverbindung oder eine stickstoffhaltige heterozyklische aromatische Verbindung ist, die aus der Gruppe bestehend aus Benzol, Naphthalen, Anthracen, Diphenylethan, Pyridin, Pyrimidin, Pyrazin, Quinolin, Isoquinolin, N-Alkylpyrrol, N-Alkylindol, N-Alkyldibenzopyrrol gewählt wird, wobei 1 bis 4 Wasserstoffatome eines aromatischen Rings der aromatischen Kohlenwasserstoff- oder stickstoffhaltigen heterozyklischen aromatischen Verbindung durch eine Alkylgruppe mit 1 bis 6 Kohlenstoffatomen ersetzt wird;
eine Elektrodeneinheit (100) einschließlich einer Elektrolytmembran (110) mit ionischer Leitfähigkeit, eine Reduktionselektrode (120), die auf einer Seite der Elektrolytmembran (110) vorgesehen ist und einen Reduktionskatalysator zum Hydrieren von mindestens einem Benzolring der aromatischen Verbindung enthält, und eine Sauerstoff entwickelnde Elektrode (130), die auf der anderen Seite der Elektrolytmembran (110) vorgesehen ist;
eine Leistungsregelungseinheit (20) zum Anlegen einer Spannung Va zwischen der Reduktionselektrode (120) und der Sauerstoff entwickelnden Elektrode (130); wobei die elektrochemische Reduktionsvorrichtung (10) des Weiteren charakterisiert ist durch
eine Umlaufleitung, die den Lagertank (30) für organische Stoffe und die Reduktionselektrode (120) der Elektrodeneinheit (100) verbindet, wobei die organische Flüssigkeit durch die Umlaufleitung fließt;
eine Konzentrationsmesseinheit (34) zum Messen einer Konzentration der aromatischen Verbindung, die der Reduktionselektrode (120) zugeführt werden soll, und
eine Justiereinheit (62) für die Menge der Rohstoffzuführung zum Einstellen der Menge der organischen Flüssigkeit einschließlich der aromatischen Verbindung, die der Reduktionselektrode (120) pro Zeiteinheit anhand der durch die Konzentrationsmesseinheit (34) gemessenen Konzentration der aromatischen Verbindung zugeführt werden soll, wobei die Justiereinheit (62) für die Menge der Rohstoffzuführung so angeordnet ist, dass die Menge der der Reduktionselektrode (120) zugeführten organischen Flüssigkeit erhöht wird, wenn die Konzentration der aromatischen Verbindung sinkt.

2. Verfahren zum Herstellen eines Hydrids einer aromatischen Verbindung, wobei die aromatische Verbindung eine aromatische Kohlenwasserstoffverbindung oder eine stickstoffhaltige heterozyklische aromatische Verbindung ist, die aus der Gruppe bestehend aus Benzol, Naphthalen, Anthracen, Diphenylethan, Pyridin, Pyrimidin, Pyrazin, Quinolin, Isoquinolin, N-Alkylpyrrol, N-Alkylindol, N-Alkyldibenzopyrrol gewählt wird, wobei 1 bis 4 Wasserstoffatome eines aromatischen Rings der aromatischen Kohlenwasserstoff- oder stickstoffhaltigen heterozyklischen aromatischen Verbindung durch eine Alkylgruppe mit 1 bis 6 Kohlenstoffatomen ersetzt wird, wobei das Verfahren Folgendes umfasst:

Einleiten der aromatischen Verbindung zur Seite der Reduktionselektrode (120) der Elektrodeneinheit (100);
Umlaufen von Wasser oder eines befeuchteten Gases zur Seite der Sauerstoff entwickelnden Elektrode (130); und

Hydrieren mindestens eines Benzolrings der aromatischen Verbindung, die auf die Seite der Reduktionselektrode (120) eingeleitet wurde, und zwar unter Verwendung der elektrochemischen Reduktionsvorrichtung (10) nach Anspruch 1.

**Revendications**

1.  Dispositif de réduction électrochimique (10) comprenant:

    un réservoir de stockage de matière organique (30) stockant un liquide organique contenant un composé aromatique, ledit composé aromatique étant un composé hydrocarboné aromatique ou un composé aromatique hétérocyclique contenant de l'azote choisi dans le groupe constitué par le benzène, le naphtalène, l'anthracène, le diphényléthane, la pyridine, la pyrimidine, la pyrazine, la quinoléine, l'isoquinoléine, le N-alkylpyrrole, le N-alkylindole, le N-alkyldibenzopyrrole, 1 à 4 atome(s) d'hydrogène d'un noyau aromatique du composé hydrocarboné aromatique ou du composé aromatique hétérocyclique contenant de l'azote étant substitué(s) par un groupe alkyle ayant 1 à 6 atome(s) de carbone;
    une unité d'électrodes (100) comprenant une membrane électrolytique (110) ayant une conductivité ionique, une électrode de réduction (120) qui est prévue sur un côté de la membrane électrolytique (110) et qui contient un catalyseur de réduction pour l'hydrogénation d'au moins un noyau benzénique du composé aromatique et une électrode dégageant de l'oxygène (130) qui est prévue sur l'autre côté de la membrane électrolytique (110);
    une unité de commande de puissance (20) pour appliquer une tension Va entre l'électrode de réduction (120) et l'électrode dégageant de l'oxygène (130); où le dispositif de réduction électrochimique (10) est en outre **caractérisé par**
    une voie de circulation qui relie le réservoir de stockage de matière organique (30) et l'électrode de réduction (120) de l'unité d'électrodes (100), le liquide organique traversant la voie de circulation;
    une unité de mesure de concentration (34) pour mesurer une concentration du composé aromatique à fournir à l'électrode de réduction (120); et
    une unité de réglage de quantité d'alimentation en matière première (62) pour régler la quantité du liquide organique comportant le composé aromatique à fournir à l'électrode de réduction (120) par unité de temps sur la base de la concentration du composé aromatique mesurée par l'unité de mesure de concentration (34), où l'unité de réglage de quantité d'alimentation en matière première (62) est configurée pour augmenter la quantité du liquide organique à fournir à l'électrode de réduction (120) lorsque la concentration du composé aromatique diminue.

2.  Procédé de fabrication d'un hydrure d'un composé aromatique, dans lequel le composé aromatique est un composé hydrocarboné aromatique ou un composé aromatique hétérocyclique contenant de l'azote choisi dans le groupe constitué par le benzène, le naphtalène, l'anthracène, le diphényléthane, la pyridine, la pyrimidine, la pyrazine, la quinoléine, l'isoquinoléine, le N-alkylpyrrole, le N-alkylindole, le N-alkyldibenzopyrrole, 1 à 4 atome(s) d'hydrogène d'un noyau aromatique du composé hydrocarboné aromatique ou du composé aromatique hétérocyclique contenant de l'azote étant substitué(s) par un groupe alkyle ayant 1 à 6 atome(s) de carbone, le procédé comprenant :

    l'introduction du composé aromatique du côté électrode de réduction (120) de l'unité d'électrodes (100);
    la mise en circulation de l'eau ou d'un gaz humidifié du côté électrode dégageant de l'oxygène (130); et
    l'hydrogénation d'au moins un noyau benzénique du composé aromatique introduit du côté électrode de réduction (120), en utilisant le dispositif de réduction électrochimique (10) selon la revendication 1.

FIG.1

FIG.2

FIG.3

RELATIVE CURRENT DENSITY

6

5

4

3

2

1

0

10% OF TOLUENE CONCENTRATION
20% OF TOLUENE CONCENTRATION
50% OF TOLUENE CONCENTRATION
100% OF TOLUENE CONCENTRATION

0   1   2   3   4   5   6   7   8   9   10

FLOW RATE OF ORGANIC LIQUID (RELATIVE VALUE)

EP 2 980 276 B1

## FIG.4

```
                    ┌──────────┐
                    │  START   │
                    └────┬─────┘
                         │                              ◄────────────┐
        ┌────────────────┴──────────────┐  ⌇ S10                    │
        │    CONCENTRATION OF           │                           │
        │  AROMATIC COMPOUND            │                           │
        │     IS ACQUIRED               │                           │
        └────────────────┬──────────────┘                           │
                         │                                          │
        ┌────────────────┴──────────────┐  ⌇ S20                    │
        │   SUPPLY AMOUNT OF            │                           │
        │   ORGANIC LIQUID              │                           │
        │    IS ADJUSTED                │                           │
        └────────────────┬──────────────┘                           │
                         │                                          │
        ┌────────────────┴──────────────┐  ⌇ S30                    │
        │     V_allow  IS SET           │                           │
        └────────────────┬──────────────┘                           │
                         │                                          │
        ┌────────────────┴──────────────┐  ⌇ S40                    │
        │   V_CA (TARGETED              │                           │
        │    VALUE) IS SET              │                           │
        └────────────────┬──────────────┘                           │
                         │                                          │
          ─────────────►─┤                                          │
        ┌────────────────┴──────────────┐  ⌇ S50                    │
        │   ΔV_CA  IS DETECTED          │                           │
        └────────────────┬──────────────┘                           │
                         │                                          │
        ┌────────────────┴──────────────┐  ⌇ S60                    │
        │    V_CA  IS CALCULATED        │                           │
        └────────────────┬──────────────┘                           │
                         │                                          │
                      ◇ S70                                         │
```

$$\text{ARE } |V_{CA} \text{ (ACTUAL MEASUREMENT VALUE)} - V_{CA} \text{ (TARGETED VALUE)}| \leq \text{TOLERANCE}$$
$$\text{AND } V_{HER} - V_{allow} \leq V_{CA} \text{ (ACTUAL MEASUREMENT VALUE)} \leq V_{TRR} \text{ SATISFIED?}$$

yes

no

V_a IS ADJUSTED  ⌇ S80

FIG.5

POWER SOURCE

D/D ±    20

EP 2 980 276 B1

18

**EP 2 980 276 B1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2003045449 A
- JP 2005126288 A
- JP 2005239479 A
- WO 2012043086 A
- US 2007000788 A
- CN 202465890

**Non-patent literature cited in the description**

- **MASARU ICHIKAWA.** *J. Jpn. Inst. Energy,* 2006, vol. 85, 517